# EUROPÄISCHE PATENTSCHRIFT

(11) **EP 3 186 849 B1**
(45) Veröffentlichungstag und Bekanntmachung des Hinweises auf die Patenterteilung: **31.12.2025**
(21) Anmeldenummer: 15757174.6
(22) Anmeldetag: 14.08.2015
(51) Int. Cl.: H01M 8/24

(54) **GEHÄUSE FÜR EINEN BRENNSTOFFZELLENSTAPEL**
HOUSING FOR A FUEL CELL STACK
BOÎTIER POUR EMPILEMENT DE PILES À COMBUSTIBLE

(30) Priorität: 28.08.2014 DE 102014217220
(43) Veröffentlichungstag der Anmeldung: 05.07.2017
(73) Patentinhaber: Bayerische Motoren Werke Aktiengesellschaft, 80809 München (DE)
(72) Erfinder: HEINING, Fabian, 97616 Bad Neustadt (DE); HAASE, Stefan, 80807 München (DE); WITTCHEN, Lukas, 80636 München (DE)
(86) Internationale Anmeldenummer: PCT/EP2015/068731
(87) Internationale Veröffentlichungsnummer: WO 2016/030211

(56) Entgegenhaltungen:
- EP-A1- 2 658 023
- WO-A1-2004/075330
- WO-A1-2006/104442

## Beschreibung

Die vorliegende Erfindung betrifft ein Gehäuse für einen Brennstoffzellenstapel.

Aus der WO 03/094275 A1 ist ein Brennstoffzellenstapel mit Endplatten bekannt, an denen Seitenplatten angeschweißt werden. Ferner offenbart die EP 1 597 790 B1 eine Endplatte für einen Stapel von Brennstoffzellen mit einem gewölbten Druckschild.

Es ist eine bevorzugte Aufgabe der hier offenbarten Technologie, die Nachteile der vorbekannten Lösung zu verringern bzw. zu beheben. Ferner existiert ein Bedürfnis, ein vergleichsweise kompaktes Gehäuse bereitzustellen, welches bei geringem Gewicht und Volumen die einzelnen Brennstoffzellen des Brennstoffzellenstapels sicher verspannt und etwaige Längentoleranzen sicher ausgleicht. Ferner besteht ein Bedürfnis, ein Gehäuse mit guter bzw. verbesserter thermischer und/oder elektrischer Isolation bereitzustellen. Auch existiert ein Bedürfnis, ein kostengünstiges Brennstoffzellensystem vorzusehen.

Die Aufgabe der vorliegenden Erfindung wird gelöst durch den Gegenstand des Patentanspruchs 1. Die abhängigen Ansprüche stellen bevorzugte Ausgestaltungen dar.

Die hier offenbarte Technologie betrifft ein Gehäuse für einen Brennstoffzellenstapel. Das Gehäuse umfasst zwei Endplatten, die an den beiden Enden des Brennstoffzellenstapels angeordnet sind. Ferner umfasst das Gehäuse zwei gegenüberliegende Seitenwände, die die Endplatten miteinander verbinden.

Insbesondere werden die Endplatten derart miteinander verbunden, dass die zwischen den Endplatten angeordneten Brennstoffzellen des Brennstoffzellenstapels verspannt werden. Das hier offenbarte Gehäuse umfasst ferner eine seitliche Verbindungswand, welche zumindest bereichsweise die gegenüberliegenden Seitenwände miteinander verbindet. Die Verbindungen der Seitenwände, der Verbindungswand und der Endplatten miteinander ist bevorzugt derart, dass die Verbindung(en) fluiddicht sind.

Das Gehäuse kann mindestens ein Medienaustauschelement mit Medienanschlüssen umfassen. Das Medienaustauschelement kann in einer oder in beiden Endplatten integriert sein. Ferner kann alternativ oder zusätzlich ein separates Medienaustauschelement zwischen den Endplatten und dem Brennstoffzellenstapel angeordnet sein.

Die zwei Endplatten können jeweils als stranggepresste Tragstruktur ausgebildet sein. Eine Tragstruktur ist ein Tragwerk umfassend mehrere im Querschnitt winklig zueinander angeordneter Wände bzw. Stäbe, die voneinander beabstandete Außenkonturen der Tragstruktur miteinander verbinden. Eine solche Tragstruktur weist eine höhere Steifigkeit auf als ein Bauteil, welches lediglich aus den beiden Außenwänden besteht, die direkt aufeinander aufliegen und nicht voneinander beabstandet sind.

Die hier offenbarten Endplatten kann jeweils als stranggepresste Tragstruktur ausgebildet sein. Die Ausbildung als stranggepresstes Element ermöglicht eine kostengünstige Herstellung der Endplatten, die dann in der Regel vergleichsweise leicht und verwindungssteif sind.

Das Gehäuse kann insbesondere ein Medienaustauschelement mit Medienanschlüssen umfassen, die nicht quer durch die äußeren Außenkonturen bzw. -flächen der Endplatte hindurchgeführt sind. Dies bedeutet, dass die Medienanschlüsse nicht durch die Endplatten zu etwaigen weiteren Leitungen herausgeführt sind, sondern an einer seitlichen Öffnung des Gehäuses.

Insbesondere vorteilhaft sind die Medienanschlüsse auf der Anschlussseite des Gehäuses herausgeführt. Die Anschlussseite des Gehäuses ist bevorzugt gegenüber der Verbindungswand angeordnet. Bevorzugt sind alle Medienanschlüsse nur an der Anschlussseite herausgeführt. Vorteilhaft kann auch die Anschlussseite durch eine plattenartige Wand verschlossen werden. Somit wird ein allseitig umschlossenes Gehäuse offenbart, bei dem lediglich auf einer Seite seitlich die Medienanschlüsse herausgeführt sind.

Das hier offenbarte Gehäuse ist vergleichsweise leicht und verwindungssteif und kann die Brennstoffzelle überdies gegen mechanische Einflüsse schützen. Bevorzugt ist das Gehäuse vergleichsweise fluiddicht.

Bevorzugt weisen auch die gegenüberliegenden Seitenwände und/oder die seitliche Verbindungswand eine Tragstruktur auf. Vorteilhaft sind die Außenwände der Tragstruktur der Seitenwände und/oder der seitlichen Verbindungswand geringer voneinander beabstandet als die Außenwände der beiden Endplatten. Mit anderen Worten umfasst die Endplatte eine Tragstruktur, die verwindungssteifer als die Tragstruktur der Seitenwände und/oder der seitlichen Verbindungswand ist, wodurch eine Gewichtsreduktion der Seitenwände und der Verbindungswand erreicht werden kann.

Ist das Medienelement separat ausgeführt, so ist es vorteilhaft als im Wesentlichen ebene Platte ausgeführt, die geeignet ist, die von den Endplatten aufgebrachte Flächenpressung gleichmäßig an den Brennstoffzellenstapel oder etwaigen anderen Komponenten weiterzugeben.

Bevorzugt sind zwischen den Endplatten Isolationsschichten und Stromabnehmer angeordnet. Beispielsweise kann eine Isolationsschicht in ein Medienanschluss- bzw. Medienaustauschelement integriert sein bzw. dieses kann als Isolationsschicht fungieren. Ferner bevorzugt umfasst die mindestens eine Tragstruktur in den Endplatten, den gegenüberliegenden Seitenwänden und/oder der seitlichen Verbindungswand zumindest eine von außen zugängliche Ausnehmung bzw. zumindest einen von außen zugänglichen Durchgang auf. Die Ausnehmung bzw. der Durchgang können ausgebildet sein, mindestens eine Systemkomponente des Brennstoffzellensystems aufzunehmen.

Eine Systemkomponente ist beispielsweise ein Bauteil, welches zum Betrieb des Brennstoffzellensystems notwendig ist. Solche Systemkomponenten sind bspw. Komponenten, die im Hochvoltbereich der Brennstoffzelle angeordnet sind. Beispielsweise umfassen solche Systemkomponenten die Balance of Plant Komponenten (BoP-Komponenten). Solche Elemente sind bspw. die Rezirkulationspumpe H2 oder der Cell Voltage Monitor.

Bevorzugt weist die Tragstruktur der Endplatten, der gegenüberliegenden Seitenwände und/oder der seitlichen Verbindungswand zumindest einen Medienkanal auf. Der Medienkanal ist bevorzugt ausgebildet, eine Fluidverbindung zwischen dem Brennstoffzellenstapel und mindestens einer am Gehäuse anliegenden Fluidleitung herzustellen. Beispielsweise können die Medienkanäle die Versorgung der Brennstoffzelle mit Brennstoff, z.B. Wasserstoff, und mit Oxidationsmitteln, bspw. Luftsauerstoff, sicherstellen. Ferner kann beispielsweise durch die Medienkanäle Kühlflüssigkeit zu- und abfließen. Die Medienkanäle können in verschiedenen Tragstrukturen verschiedener Endplatten bzw. Seitenwände angeordnet sein.

Die Integration solcher Systemkomponenten und/oder solcher Medienkanäle in die Strangpressprofile ermöglicht einen kompakten Systemaufbau mit vergleichsweise steifen und leichten Komponenten, der überdies vergleichsweise günstig zu fertigen ist.

Die mindestens eine Endplatte kann im Querschnitt eine konvexe bzw. nach außen gewölbte Außenkontur aufweisen. Die Außenkontur kann derart bemessen sein, dass sie sich während des Verspannens des Brennstoffzellenstapels verformt. Insbesondere kann sie während des Schweißvorgangs bereits verformt sein, insbesondere derart, dass die Außenkontur zumindest bereichsweise auf dem angrenzenden Bauteil, das sich zwischen den beiden Endplatten befindet, flächig aufliegt. Das angrenzende Bauteil ist beispielsweise eine Isolationsschicht bzw. -platte, ein Medienaustauschelement, ein Brennstoffzellenstapel, etc.. Durch diese Bombierung bzw. konvexe Ausgestaltung der inneren Außenkontur, bevorzugt als 2D-Wölbung, wird die Verspannkraft, die den Brennstoffzellenstapel verspannt, zumindest gebietsweise, bevorzugt über die gesamte Auflagefläche, gleichmäßig aufgebracht. Besonders bevorzugt kann somit durch die Bombierung der Endplatte ein annähernd homogener Anpressdruck auf den Brennstoffzellenstapel ausgeübt werden. Der Anpressdruck kann entweder direkt auf den Brennstoffzellenstapel oder indirekt, bspw. über ein plattenförmig ausgebildetes Medienaustauschelement, aufgebracht werden. Anstelle eines Strangpressprofils wäre auch eine im Druckgussverfahren hergestellte Endplatte denkbar. Eine solche Platte wäre jedoch nicht so günstig zu fertigen wie eine stranggepresste Endplatte.

Bevorzugt sind die gegenüberliegenden Seitenwände und die Endplatte derart miteinander verschweißt, dass die Brennstoffzellen des Brennstoffzellenstapels verspannt sind bzw. werden. Bevorzugt ist ebenfalls die seitliche Verbindungswand mit den Endplatten verschweißt.

Bevorzugt sind die gegenüberliegenden Seitenwände und die seitliche Verbindungswand einstückig und/oder U-förmig ausgebildet. Ein solches vorgeformtes Halbzeug kann bspw. ein U-förmig geformten Blech aufweisen. Ein solches Halbzeug kann die Fertigung weiter vereinfachen und kann zu dichteren Gehäusen führen. Bevorzugt ist die mindestens eine Tragstruktur der Endplatten, der gegenüberliegenden Seitenwände und/oder der seitlichen Verbindungswand zu den Verbindungsbereichen hin auslaufend geformt. Eine solche auslaufende Form bedeutet, dass die Außenwände der Tragstruktur zum Verbindungsbereich hin aufeinander zu laufen und im Verbindungsbereich ineinander übergehen. Eine solche Ausgestaltung lässt sich besonders gut schweißen.

Bevorzugt umfasst ein Verfahren zur Herstellung des Gehäuses folgende Schritte:
- Bereitstellen eines Brennstoffzellenstapels in einer Presse,
- Verspannen des Brennstoffzellenstapels in der Presse,
- Verschweißen von mindestens zwei gegenüberliegenden Seitenwänden mit zwei Endplatten, wobei die Endplatten am Kopf- und Fußende des Brennstoffzellenstapels angeordnet sind, und wobei die Seitenwände seitlich des Brennstoffzellenstapels angeordnet sind.

Mit anderen Worten handelt es sich um ein Verfahren zur Herstellung eines Gehäuses mit einem Brennstoffzellenstapel, umfassend die Schritte:
- Bereitstellen von
   ∘ zwei stranggepresste Endplatten, die an den beiden Enden des Brennstoffzellenstapels angeordnet sind und eine Tragstruktur aufweisen;
   ∘ zwei gegenüberliegende Seitenwände, die im montierten Zustand die Endplatten miteinander verbinden;
   ∘ einer seitlichen Verbindungswand, die die gegenüberliegenden Seitenwände miteinander verbindet; und
   ∘ einem Brennstoffzellenstapel;
- Verspannen des Brennstoffzellenstapels mit den Endplatten (110); und
- Verschweißen der zwei gegenüberliegenden Seitenwände mit den seitlichen Endplatten.

Nach dem Schweißen kann dann die Presskraft des Presswerkzeugs verringert werden und das Gehäuse samt verspanntem Brennstoffzellenstapel entnommen werden. Bevorzugt verformt sich die gewölbte Außenkontur der Innenseite der Endplatten während der Reduktion der Presskraft auf eine ebene Krafteinbringung auf die Brennstoffzellen. Das erfindungsgemäße Verfahren kann ferner den Schritt umfassen: Montieren von mindestens einer Systemkomponente des Brennstoffzellensystems in zumindest einer zugänglichen Ausnehmung bzw. einem zugänglichen Durchgang einer Tragstruktur.

Die hier offenbarte Technologie wird nun anhand der Figuren näher beschrieben. Die Figuren dienen lediglich illustrativen Zwecken und sollen nicht zur einschränkenden Auslegung der Patentansprüche herangezogen werden. Es zeigen:
- Fig. 1: eine schematische Perspektivansicht des Brennstoffzellengehäuses 100 samt Brennstoffzellenstapel 200,
- Fig. 2 und3: schematische Querschnittsansichten einer Endplatte 110,
- Fig. 4: eine perspektivische Ansicht eines Medienaustauschelementes 140,
- Fig. 5: eine perspektivische Ansicht einer Isolationsplatte 170, und
- Fig. 6 bis 8: perspektivische Ansichten der Seitenwände 120 und der seitlichen Verbindungswand 130.

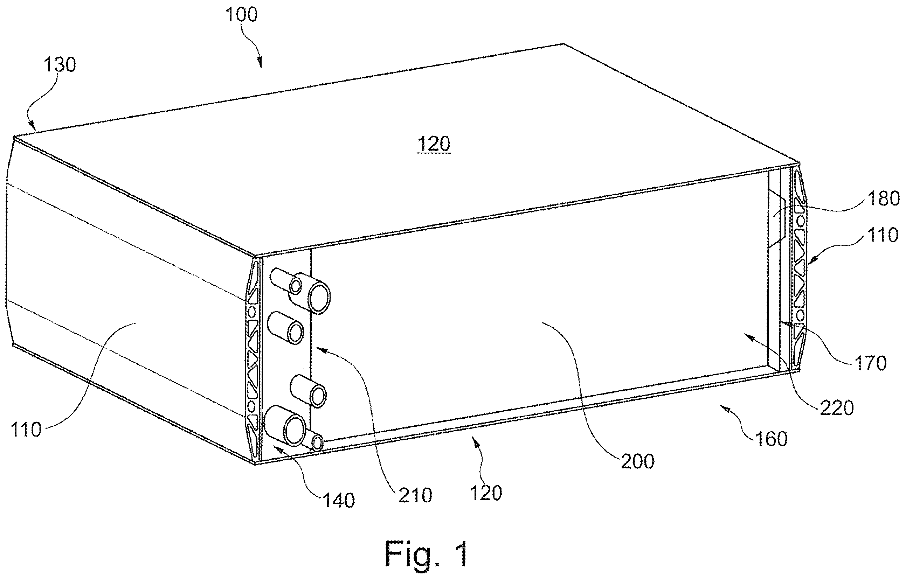

Fig. 1 zeigt eine perspektivische Ansicht des hier offenbarten Gehäuses 100. Die Endplatten 110 sind hier vor Kopf des Brennstoffzellenstapels 200, d.h. an den Enden 210 und 220 des Brennstoffzellenstapels 200, angeordnet. Die Endplatten 110 verspannen hier eine Gesamtheit umfassend die Elemente: Brennstoffzellenstapel 200, Medienaustauschelement 140 samt Medienanschlüsse M und Isolierplatte 170. Hier sichtbar ist lediglich ein Stromabnehmer 180. Es sind jedoch zwei Stromabnehmer 180 auf der Anschlussseite 160 aus dem Brennstoffzellenstapel 200 herausgeführt. Die beiden Endplatten 110 sind jeweils mit den gegenüberliegenden Seitenwänden 120 sowie der seitlichen Verbindungswand 130 verschweißt.

Dabei kann Form - und Kraftschluss bestehen. Die Endplatten 110 sind hier als Strangpressprofil ausgeführt. Alternativ oder zusätzlich können auch Druckgussprofile oder Mehrschichtplatten, bspw. mit Aluminiumschaum, eingesetzt werden. Solche Mehrschichtplatten sind bspw. Sandwich-Konstruktionen, bei denen ebenfalls die beiden äußeren Schichten 112, 114 voneinander beabstandet sind. Das Druckgussverfahren geht einher mit vergleichsweise hohen Herstellungskosten, bietet jedoch eine erhöhte Gestaltungsfreiheit bei der Gestaltung der Bauteile.

Nicht genauer dargestellt sind die Betriebsbauteile 300, die in den Endplatten integriert sind. Die Endplatten 110, die gegenüberliegenden Seitenwände 120 und/oder die seitliche Verbindungswand 130 sind bevorzugt aus Aluminium hergestellt. Bevorzugt wird Kunststoff als Isolations- und/oder Dichtungsmaterial eingesetzt.

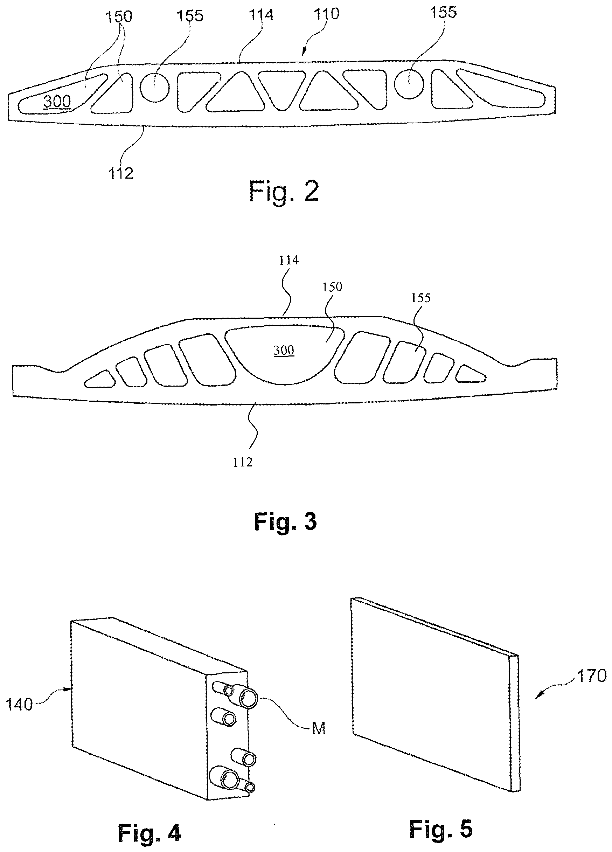

Die Endplatte 110 ist bevorzugt zumindest an der Innenseite bzw. Unterseite 112 bombiert bzw. konvex ausgestaltet (vgl. Fig. 2 und 3). Bevorzugt weist die Endplatte 110 nur im Querschnitt eine Wölbung auf, und nicht in (Strangpress)Längsrichtung. Eine solche Gestaltung der Endplatte 110 erleichtert die Herstellung im Strangpressverfahren. Da die Verspannkräfte im Wesentlichen durch die Schweißnaht im Verbindungsbereich flächig über eine gesamte Längsseite in die Endplatte 110 eingebracht wird, ist eine solche zweidimensionale Wölbung auch geeignet, die Verspannkräfte flächig auf die zwischen den Endplatten 110 angeordneten Bauteilen 140, 200, 170 zu übertragen. Durch die Einspannung am Randbereich wird die Endplatte 110 unter der Druckbelastung durchgebogen. Der Anteil des Durchbiegens entspricht genau der aufgebrachten Bombierung, so dass die Endplatte 110 dadurch eben wird und den aufgebrachten Druck homogen an die angrenzenden Bauteile weitergeben kann. Angrenzende Bauteile sind bspw. die Medienaustauschplatte 140 oder die Isolierplatte 170.

Anstatt einer Medienaustauschplatte 140 kann die Medienversorgung M auch in der Endplatte bzw. den Endplatten 110 vorgesehen sein. Beispielsweise können dazu in dem Strangpressprofil vorgesehene Kanäle 155 quer zur Strangpressrichtung aufgebohrt bzw. aufgefräst werden. Alternativ können die Endplatten 110 im Druckgussverfahren gefertigt werden.

Fig. 2 und 3 zeigen Querschnittsansichten durch Endplatten 110. Dargestellt sind hier bspw. zugängliche Ausnehmungen bzw. Durchgänge 150, in denen Systemkomponenten 300 integrierbar sind. Ferner gezeigt ist ein Medienkanal 155, der geeignet ist, ein Fluid von einer nicht dargestellten Fluidleitung zu einem Element des Brennstoffzellenstapels 200 zu befördern. Hierbei können zusätzliche Dichtmittel, beispielsweise zwischen Fluid und Endplatte 110 vorgesehen sein, z.B. Kunststoffeinleger. Die Außenkonturen 112 und 114 sind zumindest im Mittelbereich durch eine Tragstruktur voneinander beabstandet. Zu den seitlichen Enden hin konvergieren die Außenkonturen 112, 114 zueinander. Mit dem vergrößerten Abstand im Mittelbereich der hier dargestellten Endplatte 110 erhöht sich die Steifigkeit des Bauteils 110. Da die Fachwerk- bzw. Tragwerk- bzw. Tragstruktur viele ausgesparte Bereiche 150, 155 zwischen den Wänden aufweist, ist das Gewicht der Endplatte 110 vergleichsweise gering. Gleichzeitig wird dieser Bauraum 150 für Systemkomponenten 300, bspw. BoP-Komponenten 300 genutzt. Die Medienanschlüsse 155 sind nicht quer durch die Endplatten 110 hindurchgeführt. Dies bedeutet, dass die Außenkontur 114, also die Kontur, die auf der dem Brennstoffzellenstapel 200 abgewandten Seite angeordnet ist, nicht von einem Medienanschluss 155 unterbrochen wird. Anders ausgedrückt ist die gewölbte Außenkontur 114 ununterbrochen. Ein solches Bauteil 110 weist eine besonders hohe Steifigkeit bei vergleichsweise geringem Gewicht auf. Nicht dargestellt in Fig. 2 sind etwaige Ausfräsungen, die die Medienkanäle 155 mit etwaigen Anschlüssen des Brennstoffzellenstapels 200 verbinden.

Fig. 4 zeigt eine plattenförmige Ausgestaltung eines separaten Medienaustauschelementes 140. Alle Medienanschlüsse M sind zu einer Seite hin ausgeführt. Eine solche Ausgestaltung des Gehäuses 100 vereinfacht die Montage bzw. Demontage des Gehäuses 100 am Fahrzeug. Fig. 5 zeigt einen plattenförmigen Isolator 170.

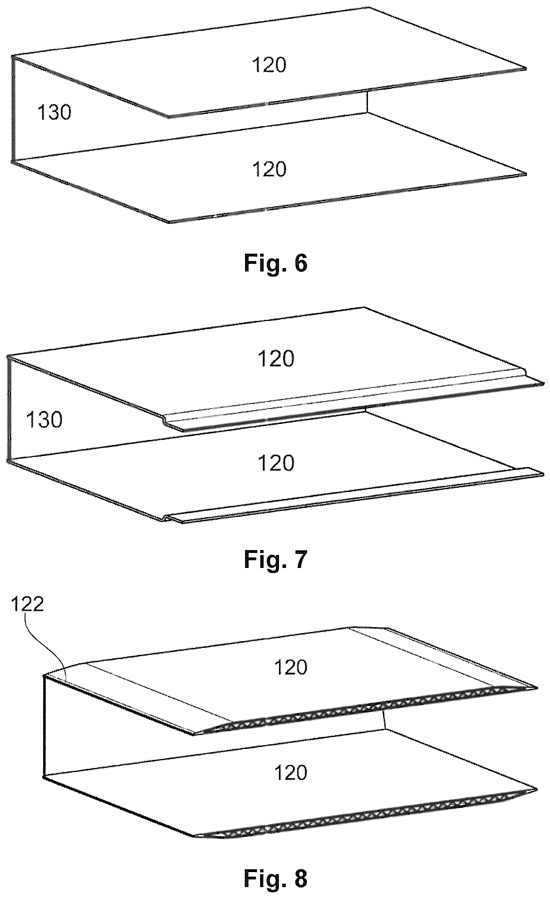

Fig. 6 zeigt gegenüberliegende Seitenwände 120 sowie eine seitliche Verbindungswand 130. Die drei Elemente 120, 130 sind hier als U-förmiges Halbzeug zusammengefügt. Bevorzugt sind die Elemente aus Aluminium oder Magnesium gefertigt. Die hier gezeigte Ausführung kann bspw. aus einem Plattenmaterial im Biegeverfahren hergestellt werden. Alternativ könnten auch drei Einzelplatten zusammengefügt werden.

Fig. 7 zeigt ebenfalls ein U-förmiges Halbzeug, bei dem die gegenüberliegenden Seitenwände 120 an der vorderen Kante eine kleine Abknickung bzw. Falz aufweisen. Eine solche Abknickung kann das Bauteil zusätzlich versteifen und die Anbringung an das Fahrzeug erleichtern. Ansonsten kann das U-förmige Halbzeug genauso ausgestaltet sein wie in Fig. 6.

Fig. 8 zeigt eine weitere Ausgestaltung des U-förmigen Halbzeuges, bei der zumindest die gegenüberliegenden Seitenwänden 120 eine versteifte Geometrie aufweisen. Zur Versteifung ist hier in den gegenüberliegenden Seitenwänden 120 jeweils eine Tragstruktur vorgesehen. Die Versteifung dient zur Verminderung der auf den Brennstoffzellenstapel 200 wirkenden Torsionsbelastung. Zur Halterung des Gehäuses 100 können flächig auf den Endplatten 110 bzw. auf den gegenüberliegenden Seitenwänden 120 verteilt Ankerpunkte vorgesehen sein. Alternativ und/oder zusätzlich können im abgeknickten Bereich (vgl. Fig. 7) Halterungspunkte vorgesehen sein.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

## Patentansprüche

1. Gehäuse (100) für einen Brennstoffzellenstapel (200), umfassend:
- zwei Endplatten (110), die an den beiden Enden (210, 220) des Brennstoffzellenstapels (200) angeordnet sind;
- zwei gegenüberliegende Seitenwände (120), die die Endplatten (110) miteinander verbinden;
- eine seitliche Verbindungswand (130), die die gegenüberliegenden Seitenwände (120) miteinander verbindet; und
- mindestens ein Medienaustauschelement (140) mit Medienanschlüssen (M), **dadurch gekennzeichnet, dass**
- zumindest die zwei Endplatten (110) jeweils als stranggepresste Tragstruktur ausgebildet sind, und dass die Medienanschlüsse (M) nicht quer durch die Endplatten (110) hindurchgeführt sind.

2. Gehäuse (100) nach Anspruch 1, wobei die Medienanschlüsse (M) auf der Anschlussseite (160) aus dem Gehäuse (100) herausgeführt sind, und wobei die Anschlussseite (160) gegenüber der Verbindungswand (130) angeordnet ist.

3. Gehäuse (100) nach Anspruch 1 oder 2, wobei auch die gegenüberliegenden Seitenwände (120) und/oder die seitliche Verbindungswand (130) eine Tragstruktur aufweisen.

4. Gehäuse (100) nach einem der vorherigen Ansprüche, wobei die Tragstruktur zumindest eine(n) zugängliche(n) Ausnehmung und/oder Durchgang (150) aufweist, und wobei diese(r) Ausnehmung und/oder Durchgang (150) ausgebildet ist, mindestens eine Systemkomponente (300) des Brennstoffzellensystems aufzunehmen.

5. Gehäuse (100) nach einem der vorherigen Ansprüche, wobei die Tragstruktur zumindest einen Medienkanal (155) aufweist, und wobei der Medienkanal (155) ausgebildet ist, eine Fluidverbindung zwischen dem Brennstoffzellenstapel (200) und mindestens einer am Gehäuse (100) anliegenden Fluidleitung herzustellen.

6. Gehäuse (100) nach einem der vorherigen Ansprüche, wobei mindestens eine Endplatte (110) im Querschnitt eine konvexe Außenkontur (112) aufweist, die derart bemessen ist, dass sie sich während des Verspannens des Brennstoffzellenstapels (200) verformt, so dass die Außenkontur (112) zumindest bereichsweise auf einem angrenzenden Bauteil flächig aufliegt.

7. Gehäuse (100) nach einem der vorherigen Ansprüche, wobei die gegenüberliegenden Seitenwände (120) und die Endplatten (110) derart miteinander verschweißt sind, dass die Brennstoffzellen des Brennstoffzellenstapels (200) verspannt sind.

8. Gehäuse (100) nach einem der vorherigen Ansprüche, wobei die gegenüberliegenden Seitenwände (120) und die seitliche Verbindungswand (130) einstückig und im Querschnitt U-förmig ausgebildet sind.

9. Gehäuse (100) nach einem der vorherigen Ansprüche, wobei die Tragstruktur der Endplatten (110), der gegenüberliegenden Seitenwände (120) und/oder der seitlichen Verbindungswand (130) zu den Verbindungsbereichen hin ausläuft bzw. auslaufen.

10. Verfahren zur Herstellung eines Gehäuses (100) nach einem der vorherigen Ansprüche, umfassend die Schritte:
- Bereitstellen von
∘ einem Brennstoffzellenstapel (200);
∘ zwei stranggepresste Endplatten (110), die an den beiden Enden des Brennstoffzellenstapels (200) angeordnet sind und eine Tragstruktur aufweisen;
∘ zwei gegenüberliegende Seitenwände (120), die im montierten Zustand die Endplatten (110) miteinander verbinden; und
∘ einer seitlichen Verbindungswand (130), die die gegenüberliegenden Seitenwände (120) miteinander verbindet;
- Verspannen des Brennstoffzellenstapels (200); und
- Verschweißen der zwei gegenüberliegenden Seitenwände (120) mit den seitlichen Endplatten (110).

## Claims

1. Housing (100) for a fuel cell stack (200), comprising:
• two end plates (110) arranged at the two ends (210, 220) of the fuel cell stack (200);
• two opposite side walls (120) connecting the end plates (110) to each other;
• a lateral connecting wall (130) connecting the opposite side walls (120) to each other; and
• at least one media exchange element (140) with media connections (M), **characterized in that**
• at least the two end plates (110) are each formed as an extruded support structure, and that the media connections (M) are not led transversely through the end plates (110).

2. Housing (100) according to claim 1, wherein the media connections (M) are led out of the housing (100) on the connection side (160), and wherein the connection side (160) is arranged opposite the connecting wall (130).

3. Housing (100) according to claim 1 or 2, wherein the opposite side walls (120) and/or the lateral connecting wall (130) also have a support structure.

4. Housing (100) according to one of the preceding claims, wherein the support structure has at least one accessible recess and/or passage (150), and wherein this recess and/or passage (150) is designed to accommodate at least one system component (300) of the fuel cell system.

5. Housing (100) according to one of the preceding claims, wherein the support structure has at least one media channel (155), and wherein the media channel (155) is designed to establish a fluid connection between the fuel cell stack (200) and at least one fluid line adjacent to the housing (100).

6. Housing (100) according to one of the preceding claims, wherein at least one end plate (110) has a convex outer contour (112) in cross-section, which is dimensioned in such a way that it deforms during the clamping of the fuel cell stack (200) so that the outer contour (112) rests flat on an adjacent component at least in some areas.

7. Housing (100) according to one of the preceding claims, wherein the opposite side walls (120) and the end plates (110) are welded together in such a way that the fuel cells of the fuel cell stack (200) are clamped.

8. Housing (100) according to one of the preceding claims, wherein the opposite side walls (120) and the lateral connecting wall (130) are formed in one piece and U-shaped in cross-section.

9. Housing (100) according to one of the preceding claims, wherein the support structure of the end plates (110), the opposite side walls (120) and/or the lateral connecting wall (130) tapers or taper towards the connecting areas.

10. Method for producing a housing (100) according to one of the preceding claims, comprising the steps:
• Providing
∘ a fuel cell stack (200);
∘ two extruded end plates (110) arranged at the two ends of the fuel cell stack (200) and having a support structure;
∘ two opposite side walls (120) which, in the assembled state, connect the end plates (110) to each other; and
∘ a lateral connecting wall (130) connecting the opposite side walls (120) to each other;
• Clamping the fuel cell stack (200); and
• Welding the two opposite side walls (120) to the lateral end plates (110).

## Revendications

1. Boîtier (100) pour une pile de piles à combustible (200), comprenant :
• deux plaques d'extrémité (110) disposées aux deux extrémités (210, 220) de la pile de piles à combustible (200) ;
• deux parois latérales opposées (120) reliant les plaques d'extrémité (110) entre elles
• une paroi de liaison latérale (130) reliant les parois latérales opposées (120) entre elles ; et
• au moins un élément d'échange de fluides (140) avec des raccords de fluides (M), **caractérisé en ce que**
• au moins les deux plaques d'extrémité (110) sont chacune réalisées sous forme de structure porteuse extrudée, et **en ce que** les raccords de fluides (M) ne traversent pas transversalement les plaques d'extrémité (110).

2. Boîtier (100) selon la revendication 1, dans lequel les raccords de fluides (M) sortent du boîtier (100) du côté raccordement (160), et dans lequel le côté raccordement (160) est disposé en face de la paroi de liaison (130).

3. Boîtier (100) selon la revendication 1 ou 2, dans lequel les parois latérales opposées (120) et/ou la paroi de liaison latérale (130) présentent également une structure porteuse.

4. Boîtier (100) selon l'une des revendications précédentes, dans lequel la structure porteuse présente au moins un évidement et/ou passage (150) accessible, et dans lequel cet évidement et/ou passage (150) est conçu pour recevoir au moins un composant du système (300) du système de pile à combustible.

5. Boîtier (100) selon l'une des revendications précédentes, dans lequel la structure porteuse présente au moins un canal de fluide (155), et dans lequel le canal de fluide (155) est conçu pour établir une liaison fluidique entre la pile de piles à combustible (200) et au moins une conduite de fluide adjacente au boîtier (100).

6. Boîtier (100) selon l'une des revendications précédentes, dans lequel au moins une plaque d'extrémité (110) présente en coupe transversale un contour extérieur convexe (112) dimensionné de manière à se déformer pendant le serrage de la pile de piles à combustible (200), de sorte que le contour extérieur (112) repose à plat sur un composant adjacent au moins dans certaines zones.

7. Boîtier (100) selon l'une des revendications précédentes, dans lequel les parois latérales opposées (120) et les plaques d'extrémité (110) sont soudées entre elles de manière à ce que les piles à combustible de la pile de piles à combustible (200) soient serrées.

8. Boîtier (100) selon l'une des revendications précédentes, dans lequel les parois latérales opposées (120) et la paroi de liaison latérale (130) sont réalisées d'un seul tenant et en forme de U en coupe transversale.

9. Boîtier (100) selon l'une des revendications précédentes, dans lequel la structure porteuse des plaques d'extrémité (110), des parois latérales opposées (120) et/ou de la paroi de liaison latérale (130) s'amincit ou s'amincissent vers les zones de liaison.

10. Procédé de fabrication d'un boîtier (100) selon l'une des revendications précédentes, comprenant les étapes suivantes :
• Mise à disposition
∘ d'une pile de piles à combustible (200) ;
∘ de deux plaques d'extrémité extrudées (110) disposées aux deux extrémités de la pile de piles à combustible (200) et présentant une structure porteuse ;
∘ de deux parois latérales opposées (120) qui, à l'état monté, relient les plaques d'extrémité (110) entre elles ; et
∘ d'une paroi de liaison latérale (130) reliant les parois latérales opposées (120) entre elles ;
• Serrage de la pile de piles à combustible (200) ; et
• Soudage des deux parois latérales opposées (120) aux plaques d'extrémité latérales (110).
